# EUROPÄISCHE PATENTANMELDUNG

(11) **EP 2 336 939 A1**
(43) Veröffentlichungstag der Anmeldung: **22.06.2011**
(21) Anmeldenummer: 10174186.6
(22) Anmeldetag: 26.08.2010
(51) Int. Cl.: G06F 21/20, G06F 21/00

(54) **Externe Vorrichtung mit mindestens einem Speicher**

(30) Priorität: 18.12.2009 DE 102009059077; 18.12.2009 DE 202009017293 U
(71) Anmelder: Braun, Uwe Peter, 14467 Potsdam (DE)
(72) Erfinder: Braun, Uwe Peter, 14467 Potsdam (DE)
(74) Vertreter: Meinke, Dabringhaus und Partner GbR

(57) **Zusammenfassung**

Die Erfindung betrifft eine externe Vorrichtung (100) mit mindestens einem Speicher, die über ein serielles Bussystem mit einem Computer (24) oder Computernetzwerk verbindbar ist. Um eine externe Vorrichtung (100) zur Verfügung zu stellen, mit deren Hilfe sicherheitsrelevante Bereiche und sensible Daten in Computern (24) und Computernetzwerken einen erhöhten Schutz vor dem Zugriff von Nichtberechtigten erfahren, sieht die Erfindung vor, dass die externe Vorrichtung (100) einen Prozessor (14) sowie ein USB-Laufwerk (15) und ein biometrisches Mittel (12b) zur Identifikation einer Person aufweist, wobei Prozessor (14), USB-Laufwerk (15) und biometrisches Mittel (12b) miteinander gekoppelt sind.

## Beschreibung

### Beschreibung

Die Erfindung betrifft eine externe Vorrichtung mit mindestens einem Speicher, die über ein serielles Bussystem mit einem Computer oder Computernetzwerk verbindbar ist. Zudem betrifft die Erfindung ein Verfahren zur Verifikation einer Zugangsberechtigung eines Benutzers eines Computers oder Computernetzwerkes.

### Stand der Technik

Externe Vorrichtungen der eingangs genannten Art sind aus dem Stand der Technik bekannt und finden insbesondere in Gestalt von USB-Sticks als Speichermedium Anwendung. Sie erfüllen insbesondere die Funktion einer Festplatte, wobei die Daten elektronisch auf einem Speicher, insbesondere auf einem sogenannten Flashspeicher gespeichert sind.

Herkömmliche USB-Sticks sind derart konstruiert, dass ein USB-Stecker, der sich von einem vorderen Ende der Schaltplatte des Sticks erstreckt, freiliegt, indem er aus der Öffnung des USB-Stick-Gehäuses herausragt.

Es sind zudem USB-Sticks bekannt, die zur sicheren Speicherung und zwecks Vermeidung von Datenmissbrauch mit einer entsprechenden Software versehen sind.

Hierzu ist auch ein aus der DE 10 2009 007 345 A1 vorbekannter USB-Stick mit einer Sicherheitssteuerung mit einer USB-Schnittstelle verbunden, die eine Verbindung mit einem veränderbaren Datenträgerchip aufweist. Auf diese Weise können Daten, die auf einem Speicherchip gespeichert werden sollen, unter Verwendung der Sicherheitssteuerung verschlüsselt werden. Zudem wird die vorbekannte Sicherheitssteuerung bei einem USB-Stick verwendet, um einen Datenträger- oder Speicherchip mit der USB-Schnittstelle zu verbinden, wobei der Datenträger in den USB-Stick eingesetzt ist. Vorrichtung und Verfahren in der DE 10 2009 007 345 A1 stellen Ansätze dar, mittels eines USB-Sticks Datensicherheit zu geben und Datenmissbrauch zu verhindern.

Nachteilig bei diesen vorbekannten Vorrichtungen ist es jedoch, dass sie lediglich ein Instrumentarium zum sicheren Speichern von Daten auf USB-Sticks darstellen. Gerade in jüngster Vergangenheit hat jedoch aufgrund vermehrter Fälle von Datenmissbrauch der Schutz von Computern und Netzwerken vor Angriffen aus dem Netz bzw. von unerlaubten Zugriffen, sowohl seitens interner als auch externer Quellen, an Bedeutung zugenommen.

### Darstellung der Erfindung: Aufgabe, Lösung, Vorteile

Es ist deshalb Aufgabe der Erfindung, eine externe Vorrichtung der eingangs genannten Art zur Verfügung zu stellen, mit deren Hilfe sicherheitsrelevante Bereiche und sensible Daten in Computern und Computernetzwerken einen erhöhten Schutz vor dem Zugriff von Nichtberechtigten erfahren.

Diese Aufgabe wird mit den Merkmalen des Anspruchs 1 gelöst. Vorteilhafte Ausgestaltungen der Erfindung manifestieren sich in den Unteransprüchen.

Gemäß der Erfindung weist die externe Vorrichtung, die in einer hier verwendeten Terminologie auch als Transaktionsschlüssel bezeichnet wird, einen Prozessor sowie ein USB-Laufwerk und ein biometrisches Mittel zur Identifikation einer Person auf, wobei Prozessor, USB-Laufwerk und biometrisches Mittel miteinander gekoppelt sind.

Kernidee der Erfindung ist es, dass die Verifzierung bzw. die Zugriffsberechtigung, nachdem die externe Vorrichtung in eine USB-Schnittstelle eingesetzt ist, mittels einer eine exakte Identifikation gewährleistenden biometrischen Erfassung erfolgt.

Hierzu ist vorab das physiologische Merkmal des Benutzers auf dem USB-Laufwerk und/oder in dem Computer bzw. in dem Computernetzwerk gespeichert, so dass das erfasste und erkannte physiologische Merkmal direkt mit den hinterlegten Daten des physiologischen Merkmals vorzugsweise intern abgeglichen werden kann. Es findet auch ein Abgleich innerhalb der externen Vorrichtung mit dem Flash-Speicher und ID-Chip sowie dem physiologischen Merkmal statt, wobei die Daten dann an den Server (Computernetzwerk) gesandt werden. Das physiologische Merkmal, das vorzugsweise ein Fingerabdruck ist, wird über das biometrische Mittel, das vorzugsweise ein Fingerabdrucksensor ist, eingelesen und mit den auf dem USB-Laufwerk gespeicherten biometrischen Daten über den Prozessor der externen Vorrichtung verglichen. Daraufhin liefert ein Speicher der externen Vorrichtung, der vorzugsweise als Arbeitsspeicher vorliegt, die Bestätigung an einen Computer bzw. an ein Computernetzwerk zum Vergleich, woraufhin der Computer wiederum bei einem positiven Vergleich der Daten ein Signal an den Prozessor der externen Vorrichtung zurücksendet, so dass der Prozessor einen entsprechenden Code direkt zum Computer bzw. zum Computernetzwerk zurücksenden kann. Für die Implementierung dieser Verifizierungstechnik ist ein entsprechendes Computerprogramm vorgesehen.

Dadurch bietet die erfindungsgemäße Vorrichtung einen effizienten Zugriffsschutz für Computer, Laptops oder andere mobile computerverwandte Geräte, wie z. B. Netbooks, Smartphones oder auch Mobiltelefone. Des Weiteren bietet die erfindungsgemäße Vorrichtung einen sicheren Schutz für komplette Computernetzwerke wie sie z. B. in Forschungs- und Entwicklungseinrichtungen Verwendung finden. Dabei kann sich der Zugriffsschutz auf das gesamte System, z. B. den Computer oder das Netzwerk, erstrecken. Die erfindungsgemäße Vorrichtung bietet somit ebenfalls die Möglichkeit eines gesicherten Fernzugriffs (Secure Remote Access) auf ein Netzwerk, z. B. Unternehmensnetzwerk, Computernetzwerk einer Forschungseinrichtung, oder Universitätsnetzwerk. Dazu ermöglicht die erfindugnsgemäße Vorrichtung beispielsweise eine VPN (Virtual Private Network)-Verbindung. Dies bietet den Vorteil, dass vorab keine zusätzliche Softwareinstallation bzw. -einstellung vorgenommen werden muss, um eine VPN-Verbindung von z. B. einem Laptop zu einem Unternehmensnetzwerk einzurichten. Mit der erfindungsgemäßen Vorrichtung kann von jedem Standort nach erfolgreicher Benutzeridentifikation eine VPN-Verbindung zu einem gesicherten Netzwerk ohne zusätzliche Softwareeinstellung aufgebaut werden. Weiterhin ist es möglich, bestimmte Bereiche innerhalb des Systems durch die erfindungsgemäße Vorrichtung vor unerlaubtem Zugriff zu schützen. Hierzu können die Zugriffsrechte in Abhängigkeit der Benutzer oder Benutzergruppen entsprechend für den jeweiligen Anwendungsfall definiert und eingestellt werden. Es ist somit möglich, dass einzelne Benutzer Zugriff auf individuelle Bereiche im System erhalten oder dass Benutzer Zugriff auf vorher definierte Daten, Datenbereiche oder auch Computerprogramme haben.

Gemäß der Erfindung weist die externe Vorrichtung eine Verschlüsselungseinheit auf. Somit können verschlüsselte sowie auch unverschlüsselte Bereiche auf einer Festplatte oder einem anderen Datenträger sowie auch Partitionen auf mehreren Festplatten eines Computersystems verwaltet und vor unerlaubtem Zugriff geschützt werden. Des Weiteren kann der Zugriff auf unterschiedliche Betriebssysteme eines Systems für die verschiedenen Benutzer mit Hilfe der externen Vorrichtung geregelt werden. Somit bietet der Einsatz der erfindungsgemäßen Vorrichtung effektiven Schutz vor unerlaubten Zugriffen aus dem Netz sowohl von intern als auch von extern. Auch bietet die Erfindung Schutz vor Viren.

Vorteilhafterweise weist die erfindungsgemäße Vorrichtung einen RFID-(Radio-Frequency-Identification)Chip auf. Dieser RFID-Chip, welcher zur Identifizierung mit Hilfe elektromagnetischer Wellen dient, ermöglicht die Realisierung zusätzlicher Funktionen wie z. B. Türöffner, Personenerfassung oder Zugangskontrolle.

Des Weiteren ist es bevorzugt, dass die externe Vorrichtung einen Temperatursensor aufweist. Der Einsatz eines Temperatursensors erhöht die Sicherheit beim Einlesen des Fingerabdrucks. Somit können z. B. mögliche Kopien eines Abdrucks vom eigentlichen Fingerabdruck unterschieden und erkannt werden.

Vorzugsweise weist die externe Vorrichtung des Weiteren einen Näherungssensor auf. Durch einen solchen Näherungssensor kann z. B. festgestellt werden, ob sich eine Person im Bereich des Computers bewegt oder aufhält. Somit ist also eine zusätzliche Personenerfassung durch einen Näherungssensor möglich. Des Weiteren ist es denkbar, den Energiesparmodus des Computersystems durch den Näherungssensor zu steuern. Z. B. kann der Computer in einen bestimmten Energiesparmodus gebracht werden, falls sich der Benutzer vom Computer entfernt bzw. keine Person im Bereich des Computers ist. Aus Sicherheitsgründen sollte der Computer nach Entfernen des Users sich automatisch ausloggen, vorzugsweise innerhalb eines kurzen Zeitfensters, z. B. innerhalb einer Minute.

Vorteilhafterweise weist die erfindungsgemäße Vorrichtung eine ID-Identifizierungseinheit auf. Diese ID-Identifizierungseinheit dient zur Erzeugung von Identifizierungscodes. Dabei ist vorgesehen, weltweit einmalige 48-bit lange Identifizierungscodes mithilfe der ID-Identifzierungseinheit zu erzeugen. Kürzere bzw. längere Identifizierungscodes könnten ebenfalls erzeugt werden. Zur Erzeugung dieser Identifizierungscodes dient ein spezieller Neuron-Chip. Alternativ könnte dieser Neuron-Chip auch durch einen Mikroprozessor, wie z. B. ARM-Prozessor, ersetzt werden und mit Hilfe eines speziellen Protokolls, z. B. LON-Talk-Protokoll, der Identifizierungscode erzeugt werden. Dabei steht LON für Local Operating Network. LON ist ein in der Automatisierungstechnik häufig verwendeter Feldbus, welcher durch die internationale Norm ISO/IEC 14908 spezifiziert ist. Der generierte Identifizierungscode wird ebenso wie das physiologische Merkmal vom Mikrocontroller der externen Vorrichtung gelesen und verifiziert. Dazu vergleicht der Mikrocontroller der externen Vorrichtung den Identifizierungscode sowie das physiologische Merkmal mit vorab abgespeicherten Informationen bzw. Daten. Zur weiteren Identifizierung durch den Computer bzw. das Computernetzwerk wird der Identifizierungscode zusammen mit dem physiologischen Merkmal in verschlüsselter bzw. codierter Form zum Computer bzw. Computernetzwerk gesendet. Abschließend vergleicht der Computer bzw. ein Zielserver des Computernetzwerkes das übermittelte physiologische Merkmal sowie den übermittelten Identifizierungscode mit den auf dem Computer bzw. im Computernetzwerk abgelegten Informationen.

Vorzugsweise weist die erfindungsgemäße Vorrichtung des Weiteren ein Funkinterface auf. Bei diesem Funkinterface handelt es sich vorzugsweise um eine serielle Funkverbindung wie z. B. WLAN oder Bluetooth. Das Funkinterface kann dabei zusätzlich zur drahtgebundenen seriellen Schnittstelle, z. B. USB-Schnittstelle, in der erfindungsgemäßen Vorrichtung vorgesehen sein. Alternativ könnte die Funkverbindung auch das drahtgebundene Interface, z. B. USB-Interface, ersetzen. In jedem Fall sieht die erfindungsgemäße Vorrichtung vor, sämtliche zur Verifikation bzw. Identifikation benötigten Daten auch über die Funkverbindung zum Computer bzw. Computernetzwerk zu versenden. Demnach dient das Funkinterface ebenfalls wie z. B. die USB-Schnittstelle zur Übermittlung des physiologischen Merkmals sowie des Identifizierungscodes zum Computer bzw. Computernetzwerk zur abschließenden Identifikation. Des Weiteren können evtl. Hierarchien, z. B. nutzerbedingte Hierarchien oder Rechte, nach erfolgter Identifizierung über dieses Interface neu vergeben bzw. verändert werden. Zusätzlich ist es möglich, über dieses Funkinterface weitere Informationen zwischen Computer und externer Vorrichtung zu übertragen. Dabei könnte es sich sowohl um weitere sicherheitsrelevante Daten sowie auch um Konfigurations- bzw. Verwaltungsdaten handeln. Auch kann dieses Funkinterface dazu dienen, mit Hilfe dieser erfindungsgemäßen Vorrichtung einen Nutzer eindeutig mit einer anderen Einrichtung, wie z. B. einem Geldautomaten, zu identifizieren.

Weiterhin ist es bevorzugt, dass die erfindungsgemäße Vorrichtung eine Stromversorgungseinheit aufweist. Dabei besteht die Stromversorgungseinheit aus einem kleinen Ladepuffer, z. B. Akku oder Batterie, welche in der externen Vorrichtung vorgesehen ist, sowie vorzugsweise einem zusätzlichen, leistungsstärkeren Akku, welcher sich beispielsweise in der Schutzkappe (z. B. Kappe des USB-Sticks) befindet. Vorzugsweise weist die externe Vorrichtung eine Echtzeituhr auf, welche somit ständig über den Ladepuffer mit Spannung versorgt werden kann. Bei Betrieb der externen Vorrichtung über die drahtgebundene Schnittstelle, z. B. USB-Schnittstelle, findet die Stromversorgung über diese Schnittstelle durch den Computer statt. Des Weiteren ist es vorgesehen, diese Schnittstelle zur Ladung des Ladepuffers sowie des zusätzlich vorgesehenen Akkus zu nutzen. Dazu wird bei Betrieb über die USB-Schnittstelle der Akku, welcher sich z. B. in der Schutzkappe der Vorrichtung befindet, in geeigneter Weise mit der externen Vorrichtung zur Ladung verbunden. Zusätzlich zur Möglichkeit der Ladung über die USB-Schnittstelle ist auch eine Ladung mit einem externen Netzteil vorgesehen. Dies wird insbesondere bei Verwendung der erfindungsgemäßen Vorrichtung über das Funkinterface, z. B. WLAN oder Bluetooth, benötigt. Abhängig von der Kapazität des zusätzlichen Akkus kann der Betrieb über das Funkinterface auch ohne Verwendung eines externen Netzteils über einen längeren Zeitraum geschehen.

Vorzugweise ist die erfindungemäße Vorrichtung derart ausgebildet, dass sie zusätzlich zu den zur Identifikation benötigten sicherheitsrelevanten Daten auch Nutzerdaten mit Hilfe eines internen Speichers aufweist. Dazu weist die externe Vorrichtung vorteilhafterweise einen zusätzlichen Flash-Baustein, z. B. NOR-Flash-Baustein, auf. Abhängig vom Umfang der abzuspeichernden Nutzerdaten sowie deren Organisation könnte auch ein anderer Speicher, z. B. NAND-Flash-Baustein verwendet werden. Als Nutzerdaten können sämtliche benutzerabhängige Daten, wie z. B. Desktop-Daten abgelegt werden. Dies bietet z. B. den Vorteil, dass jeder Benutzer z. B. von ihm gewünschte bzw. häufig benutzte Informationen definieren und auf der externen Vorrichtung ablegen kann. Z. B. können somit Hintergrundfarbe des Bildschirms oder auch häufig benutzte Programme und Daten auf dem Desktop durch Links für den Nutzer nach erfolgter Identifizierung schnell zugänglich gemacht werden. Des Weiteren können Hierarchieinformationen, wie z. B. benutzerabhängige Rechte abgespeichert werden.

Der Vorteil der Erfindung ist es, dass sämtliche sicherheitsrelevanten Daten auf der für den Benutzer jederzeit zugreifbaren externen Vorrichtung abgelegt und gespeichert sind, so dass maximale Sicherheit gewährleistet ist. Zudem ist es gemäß der Erfindung auch gegeben, dass zum Starten eines Computers bzw. Computernetzwerkes ein passendes Passwort sowie ein physiologisches Merkmal des Benutzers ausreichend ist. Auch gewährleistet die Erfindung die Vollverschlüsselung, bspw. der Festplatte, des Arbeitsplatzes sowie des Computernetzwerkes.

Ein Computerprogramm für eine Computereinrichtung in Gestalt eines Computers oder Computernetzwerkes, die mit der externen Vorrichtung verbunden ist, sieht Anspruch 21 vor, wobei das Computerprogramm auf dem Computer oder Computernetzwerk implementiert ist und einen Algorithmus enthält, der bei einer Verbindung zwischen Computereinrichtung und externer Vorrichtung von einem Prozessor der Computereinrichtung abgearbeitet wird, wobei der Algorithmus das Verfahren erfasst.

Zudem sieht die Erfindung ein Verfahren zur Verifikation einer Zugangsberechtigung eines Benutzers eines Computers oder eines Computernetzwerkes vor, bei dem zur Verifikation biometrische Daten des Benutzers mittels eines biometrischen Mittels einer mit dem Computer oder Computernetzwerk verbundenen externen Vorrichtung gemäß einem der Ansprüche 1 bis 16 erfasst und erkannt werden.

Der Dialog über ein serielles Bussystem ist im Rahmen der Erfindung von Bedeutung, da die Daten auf der Programmebene des Computers, des Netzwerks, der Systemlandschaft etc. nicht gelöscht, heruntergeladen oder verschoben werden können und somit die Inhalte der Programmebene eine Geheimhaltung erfahren und der Benutzer auf diese Weise beispielsweise eine Forschungsebene mit weltweiter Vernetzung sicher gestalten kann. Unter seriellem Bussystem sind sowohl drahtgebundene, z. B. USB, Ethernet oder SATA, aber auch drahtlose, wie z. B. WLAN oder Bluetooth, Verbindungen zu verstehen.

Zur Verifikation einer Zugangsberechtigung, bzw. zur Identifikation eines Benutzers mit einem Computer bzw. mit einem Computernetzwerk wird die erfindungsgemäße Vorrichtung über eine drahtgebundene Schnittstelle, z. B. USB-Schnittstelle, oder eine Funkverbindung, z. B. WLAN oder Bluetooth, mit einem Computer oder einem Computernetzwerk bzw. einer Systemlandschaft verbunden. Nach erfolgreicher Verbindung wird durch die externe Vorrichtung ein physiologisches Merkmal, z. B. Fingerabdruck, des Benutzers gelesen. Dazu streicht oder legt der Benutzer z. B. seinen Finger über einen Fingerabdrucksensor auf der externen Vorrichtung. Danach wird das physiologische Merkmal, z. B. der Fingerabdruck, durch den Mikroprozessor innerhalb der externen Vorrichtung mit vorher abgelegten Daten des Fingerabdrucks des Benutzers verglichen und somit der Benutzer identifiziert. Des Weiteren wird der intern generierte Identifizierungscode durch den Mikroprozessor der externen Vorrichtung gelesen und mit vorher abgelegten Informationen verglichen. Danach werden sowohl der Fingerabdruck sowie auch der Identifizierungscode über das USB- bzw. das Funkinterface in verschlüsselter Form zum Computer bzw. Computernetzwerk oder der Systemlandschaft übertragen. Anschließend vergleicht der Computer bzw. der Zielserver des Computernetzwerkes oder der Systemlandschaft die empfangenen Daten mit den dort abgespeicherten Daten, dem physiologisches Merkmal des zugehörigen Benutzers sowie des zugehörigen Identifizierungscodes. Nach Übereinstimmung der Daten kann zur Erhöhung der Sicherheit zusätzlich ein Passwort bzw. eine persönliche PIN abgefragt werden. Nach erfolgreicher Identifizierung erhält der Benutzer Zugang auf bestimmte Daten des Computers bzw. des Computernetzwerkes oder der Systemlandschaft sowie Rechte, bestimmte Programme auf dem Computer bzw. im Netzwerk zu benutzen. Dabei können die Rechte bzw. Daten, welche einem Benutzer zugänglich sind, in Abhängigkeit vom Benutzer oder auch einer bestimmten Gruppenzugehörigkeit sowie weiteren Kriterien definiert werden. Diese Zugriffsrechte können jederzeit verändert werden. Bei Trennung der Verbindung zwischen externer Vorrichtung und Computer bzw. Computernetzwerk wird der Zugriff auf die Daten bzw. die Software sofort unterbrochen. Somit ist sichergestellt, dass bei Entfernen der externen Vorrichtung aus der USB-Buchse bzw. bei Entfernen der externen Vorrichtung außerhalb der Reichweite der Funkverbindung der Zugang zu den Daten bzw. der Software sofort unterbrochen wird. Bei anschließender erneuter Verbindung muss der oben beschriebene Identifizierungsvorgang erneut vorgenommen werden.

Gemäß der Erfindung wird die externe Vorrichtung mit der Schnittstelle des Computers verbunden, woraufhin das vorher installierte Computerprogramm initialisiert wird und die Anmeldung in diese Programmebene in Gang setzt. Der Computer lässt sich ohne die externe Vorrichtung wie ein herkömmlicher Computer bedienen, wobei das Computerprogramm aber nicht angesprochen wird. Hierbei ist es nicht möglich, in das Computerprogramm ohne die externe Vorrichtung einzusteigen, auch nicht über das Internet / Intranet. Vorzugsweise kann die Festplatte des Computernetzwerks mit der externen Vorrichtung abgesichert werden, indem man die Bus- und Datenleitung des Gesamtsystems Computer/Computernetzwerk und externe Vorrichtung mit der externen Vorrichtung nochmals im Gesamtsystem komplett verschlüsselt. Dies lässt sich über eine Systemsoftware umsetzen, indem man die CPU, Steuerwerk und Rechenwerk in dem Computer die Daten und Busleitungen nach dem gleichen Prinzip verschlüsselt.

Sobald das Computerprogramm auf dem Speicher ROM und Arbeitsspeicher RAM installiert wurde, kann das Computerprogramm Computer, Netzwerk, Systemlandschaft derart absichern, dass es direkt auf das Steuerwerk und Rechenwerk im Prozessor des Computers zugreift, indem die externe Vorrichtung mit einer Schnittstelle für periphere Geräteeinheiten verbunden wird. Hier sendet die externe Vorrichtung eine IP Adresse aus, die vom Steuerwerk des Computers gelesen werden kann. Erst wenn das Steuerwerk die gesendete IP Adresse bestätigt hat, wird das System automatisch gestartet.

Das erfindungsgemäße Computerprogramm wird auf dem Computer bzw. Computernetzwerk installiert, damit es als Betriebssystem für die externe Vorrichtung mit dem Computer, Netzwerk, Systemlandschaft usw. fungiert. Danach wird der Initialisierungsvorgang automatisch gestartet und die Aufforderung den Fingerabdruck des Benutzers auf dem Fingerprintsensor zu hinterlegen, wird angezeigt. Es wird daraufhin die erfolgreiche Initialisierung bestätigt oder es wird zur Wiederholung aufgefordert.

### Kurze Beschreibung der Zeichnungen

Ein Ausführungsbeispiel der Erfindung wird nachfolgend anhand der Zeichnungen näher erläutert. Es zeigen in schematisierter Darstellung:
Fig. 1 eine Bauform der erfindungsgemäßen externen Vorrichtung;
Fig. 2 den technischen Aufbau der externen Vorrichtung aus Fig. 1;
Fig. 3 den Datenverlauf in der externen Vorrichtung aus Fig. 2;
Fig. 4 die wesentlichen Komponenten eines Computers; und
Fig. 5 ein Blockschaltbild der externen Vorrichtung.

### Bevorzugte Ausführungsform der Erfindung

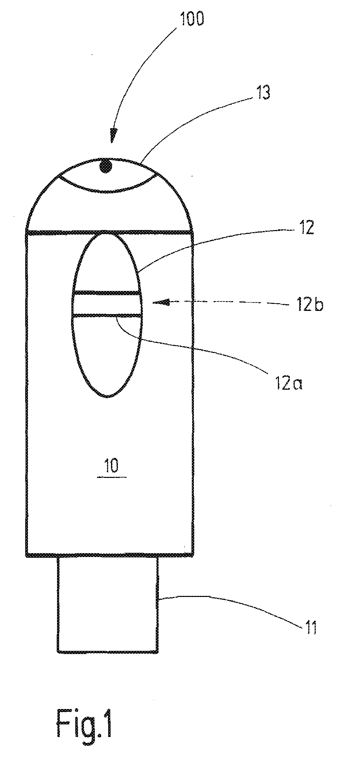

Fig. 1 zeigt eine Bauform der erfindungsgemäßen externen Vorrichtung, die mit dem Bezugszeichen 100 versehen ist.

Die externe Vorrichtung 100 weist die Bauform eines USB-Sticks auf und ist an einem Ende mit einem USB-Stecker 11 versehen, der freiliegt, indem er aus einer Öffnung des Gehäuses 10 vorragt. Der USB-Stecker 11 ist geeignet, in einen USB-Port z. B. eines Computers eingeführt zu werden.

Die externe Vorrichtung 100 weist zudem ein biometrisches Mittel 12b in Form eines Fingerabdrucksensors 12 sowie einen Näherungssensor 13 auf, die gänzlich oder zum Teil in das Gehäuse 10 integriert sind. Der Fingerabdrucksensor 12 ist derart angeordnet, dass der Benutzer der externen Vorrichtung 100 seinen Finger auf die Scannerfläche 12a legen kann, damit der Fingerabdrucksensor 12 den Fingerabdruck erfassen und dieser erkannt werden kann.

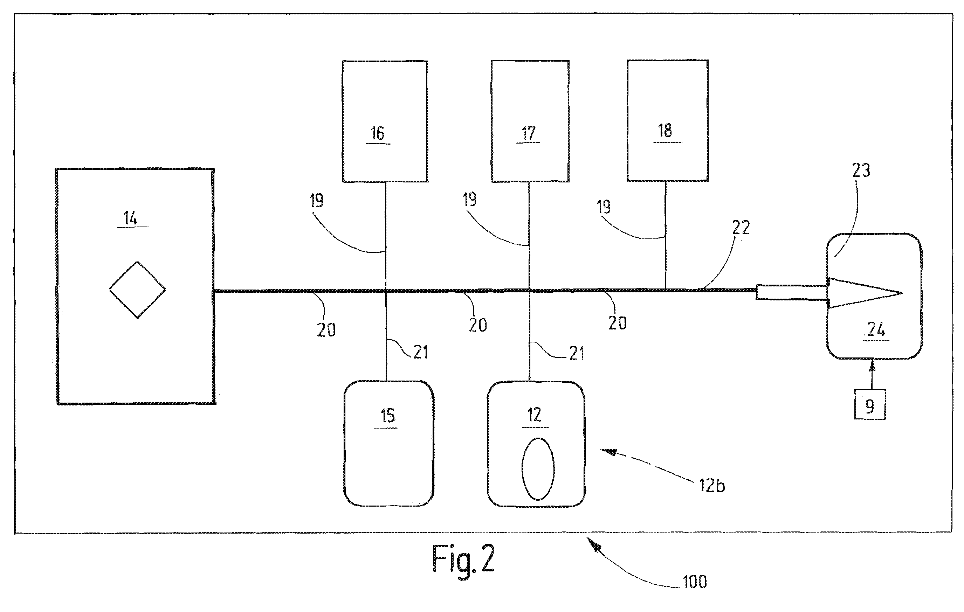

Fig. 2 zeigt den technischen Aufbau der externen Vorrichtung 100. Neben dem in Fig. 1 gezeigten Stecker 11 weist die Vorrichtung 100 das USB-Laufwerk 15 auf, das neben dem Fingerprintsensor 12 und dem als Mikroprozessor vorliegenden Prozessor 14 zu den essentiellen Komponenten der externen Vorrichtung 100 gehören.

Nach Erfassen des Fingerabdrucks des Benutzers der Vorrichtung 100 über den in Fig. 1 gezeigten Fingerabdrucksensor 12 wird der Fingerabdruck eingelesen und mit den auf dem USB-Laufwerk 15 zuvor gespeicherten biometrischen Daten verglichen. Zuvor werden weitere in Fig. 2 gezeigte Komponenten in den Prozess einbezogen, nämlich der Prozessor 14, der Arbeitsspeicher (RAM) 17 sowie der Festwertspeicher (ROM) 16, indem mit dem Einführen der externen Vorrichtung 100 in die USB-Schnittstelle 23 eines Computers 24 bei einem vorher auf dem Computer 24 implementierten Computerprogramm 9 der Computer 24 den Benutzer auffordert, seinen Fingerabdruck auf dem Fingerabdrucksensor 12 zu hinterlegen, so dass die Erfassung erfolgen kann und der Fingerabdrucksensor 12 einen digitalen Code an den Prozessor 14 der externen Vorrichtung 100 senden kann, woraufhin der Arbeitsspeicher 17 und der Speicher aktiviert werden.

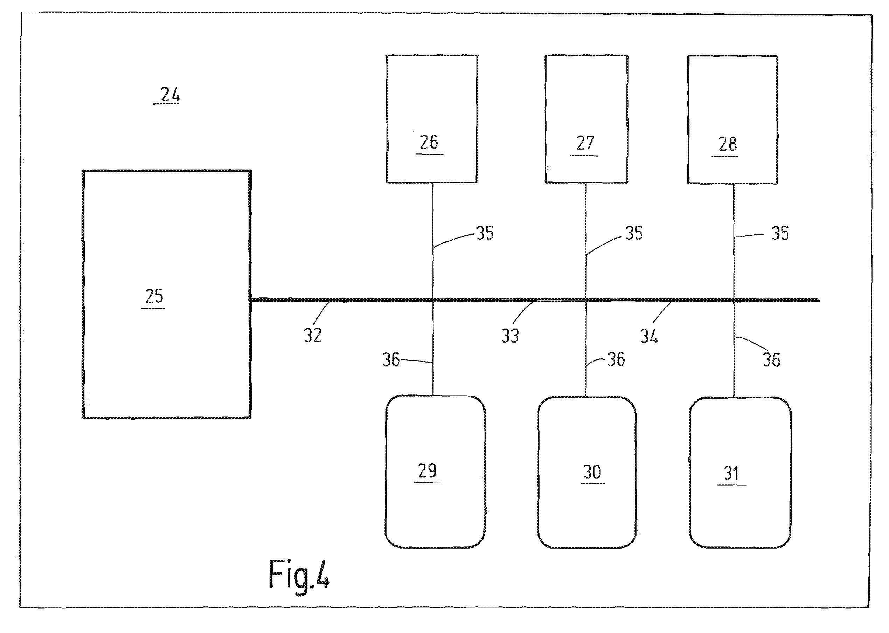

Der Festwertspeicher 16 und/oder der Arbeitsspeicher 17 der externen Vorrichtung 100 greifen jetzt auf das USB-Laufwerk 15 der externen Vorrichtung 100 zu und vergleichen die biometrischen Daten mit dem Fingerabdruck, die bereits mit der Implementierung über entsprechende Software gespeichert wurden. Nachdem dieser Prozess abgeschlossen ist, greift der in Fig. 4 gezeigte Prozessor 25 des Computers 24 auf den Festwertspeicher 26 und den Arbeitsspeicher 27 des Computers 24 zu und vergleicht den im Arbeitsspeicher 27 bereits gespeicherten Fingerabdruck des Benutzers. Als nächstes sendet der in Fig. 4 gezeigte Prozessor 25 des Computers 24 einen Initialisierungscode an den in Fig. 2 gezeigten Prozessor 14 der externen Vorrichtung 100 zurück. Erst jetzt erzeugt der Prozessor 14 der externen Vorrichtung 100 einen Log-in-Code an den Prozessor 25 des Computers 24, so dass das Gesamtsystem, d. h. Computer 24 und externe Vorrichtung 100, freigeschaltet ist.

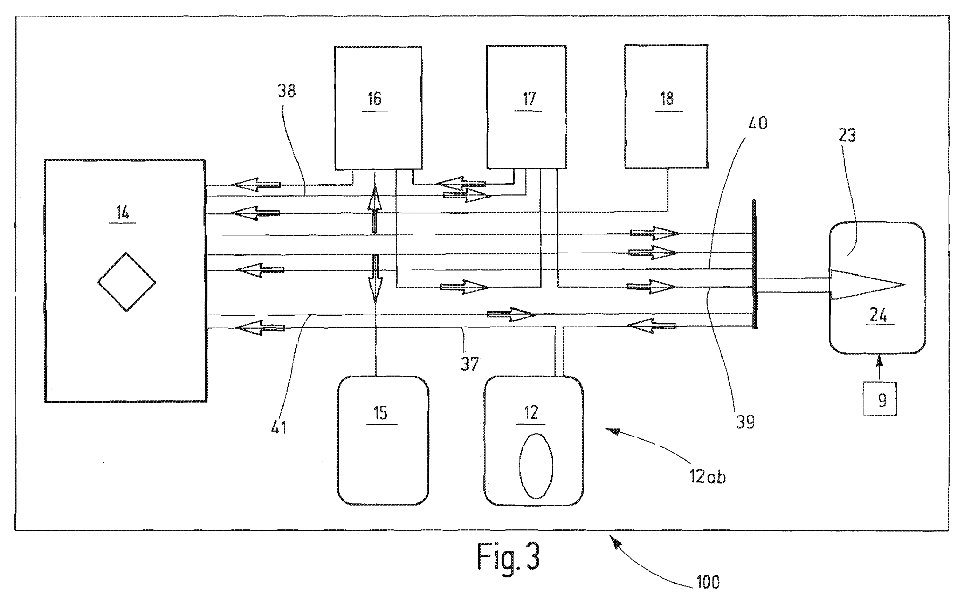

Dieser Zusammenhang geht auch noch einmal aus Fig. 3, die den Datenverlauf innerhalb der externen Vorrichtung 100 zeigt, hervor. Der an dem Fingerabdrucksensor 12 erfasste Fingerabdruck wird eingelesen und der digitale Code des Finderabdrucks wird über die Verbindung 37 zum Prozessor 14 gesendet. Von dort aus werden über die Verbindungen 38 der Arbeitsspeicher 17 und der statistische Speicher aktiviert, die sodann über Datenleitungen auf das USB-Laufwerk 15 zugreifen und die in dem USB-Laufwerk 15 durch ein entsprechendes Computerprogramm bereits gespeicherten biometrischen Daten des Fingerabdrucks vergleichen. Der Arbeitsspeicher 17 liefert eine entsprechende Festlegung über die Datenleitung 39 an den Computer 24. Der Computer 24 wiederum liefert nach einem positiven Vergleich der Daten über die Datenleitung 40 ein Signal an den Prozessor 14 der externen Vorrichtung 100, woraufhin der Prozessor 14 einen Code über die Datenleitung 41 direkt zum Computer 24 zurücksendet. Nach der Identifizierung sendet der Computer 24 über die Datenleitung 40 die Freigabe. Bei einer gegebenen Identitätsgleichheit wird dann schließlich der Zugang zum Computer 24 freigegeben.

Wie aus Fig. 2 weiter hervorgeht, weist die externe Vorrichtung 100 zudem eine WLAN-Verbindung 18 auf, die eine Fernprogrammierung der Systembedingungen ermöglicht. Die einzelnen Komponenten in der externen Vorrichtung 100 sind über Datenleitungen 19, 20, 21, 22 miteinander verbunden.

Darüber hinaus kann, wie Fig. 4 zeigt, der Computer 24 noch mit weiteren Peripheriegeräten 29, 30, 31 sowie mit einer Ein-/Ausgabe 28 versehen sein. Die in Fig. 4 gezeigten Komponenten des Computers 24 sind über Datenleitungen 32, 33, 34, 35, 36 miteinander verbunden.

Vorzugsweise ist, wie in Fig. 2 dargelegt, zum Arbeitspeicher 17 das schnelle USB-Laufwerk 15 als schneller Cache (Arbeitsregister) zugeschaltet, da der Prozessor 14 einen kleineren Arbeitsspeicher besitzt. Der Prozessor 14 vergibt zudem die IP-Adressen der Daten und Busleitungen und ordnet auf diese Weise die geplante Hierarchie auf dem Programmnetzwerk des Computers 24 des Benutzers. Auch hierzu greift der Prozessor 14 auf den Arbeitsspeicher 17 und das USB-Laufwerk 15 zu. Ein in den Fig. 1 bis 4 nicht gezeigter RFID-Chip der externen Vorrichtung 100 erkennt zudem Sicherheitsbereiche und erfasst die Benutzer der externen Vorrichtung 100 und registriert vorzugsweise bereits den mit seinen biometrischen Daten noch anzumeldenden Benutzer in dem Programmnetzwerk des Computers 24.

Die Energieversorgung der externen Vorrichtung 100 kann bspw. über die in Fig. 2 gezeigte serielle Schnittstelle 23 aus dem Computer 24 oder über eine Batterie oder Zelle kommen. In der in Fig. 2 gezeigten Ausführungsform der externen Vorrichtung 100 ist die Energieversorgung über eine Batteriepufferung gegeben.

Nach dem Reboot und dem Einloggen auf dem Computer 24 startet in der externen Vorrichtung 100 automatisch eine zuvor festgelegte Verschlüsselung. Die Verschlüsselung erfolgt über die biometrischen Datenvergleiche als Ersteinstieg, bspw. in das Computerprogramm des Computernetzwerks, und danach über den in Fig. 2 gezeigten Arbeitsspeicher 17 der externen Vorrichtung 100 sowie den in Fig. 4 gezeigten Arbeitsspeicher 27 des Computers 24.

Die externe Vorrichtung 100 verfügt dabei über ein Arbeitsprogramm, das die Hierarchien der einzelnen Benutzer organisiert. Dieses Hierarchieprogramm ist in dem Arbeitsspeicher 27 des Computers 24 geladen. Hieraufhin liefert die externe Vorrichtung 100 IP-Adressen an das Systemprogramm des Computers 24, woraufhin sich das Programm öffnet und je nach Hierarchiehinterlegung für den Benutzer zugänglich ist. Die Verschlüsselung befindet sich dabei sowohl auf der externen Vorrichtung 100 als auch auf dem Computer 24. Über ein entsprechendes Computerprogramm, welches auf dem Computer 24 implementiert ist, werden die Bus- und Datenleitungen gesteuert.

Die Entstehung der Verschlüsselung gestaltet sich nach dem biometrischen Datenabgleich derart, dass zunächst die externe Vorrichtung 100 eine IP-Adresse an den Computer 24 sendet, in dem das Hierarchieprogramm gespeichert ist. Das Hierarchieprogramm setzt wiederum automatisch eine IP-Adresse zurück. Daraufhin sendet die externe Vorrichtung 100 einen per Zufallsgenerator generierten Zahlencode, wobei der erkannte Zahlencode an die externe Vorrichtung 100 zurückgesendet wird. Es öffnet sodann das Arbeitsprogramm eine Entwicklungsplattform. Die erste IP-Adresse hat dabei bereits die Hierarchieebene der erfassten biometrischen Daten des Benutzers mitgesendet, so dass die Entwicklungsplattform nunmehr in einem zugelassenen Raster automatisch öffnet. Die Daten auf dem Entwicklungsprogramm lassen sich dabei nicht löschen oder herunterladen. Ein Programm "remove on reboot" merkt sich diese Anwendungen zum löschen oder herunterladen und entfernt oder lädt die Dateianforderungen bei einem nächsten Neustart des Computers 24, jedoch erst nach Freigabe eines Systemadministrators. Danach wird die gewünschte Datei gelöscht oder gewünschte Daten auf dem Internet/Intranet dem Benutzer zur Verfügung gestellt. Somit wird sichergestellt, dass die Daten nicht verschoben oder ggf. verloren gehen können. Es ist zu beachten, dass die Verschlüsselung nur dann gestattet werden kann, wenn sich die externe Vorrichtung 100 in der Schnittstelle 23 des Computers 24 befindet. Die Verschlüsselung startet infolgedessen nach dem Reboot und dem Einloggen nur dann automatisch, wenn die externe Vorrichtung 100 mit der Schnittstelle 23 des Computers 24 verbunden ist.

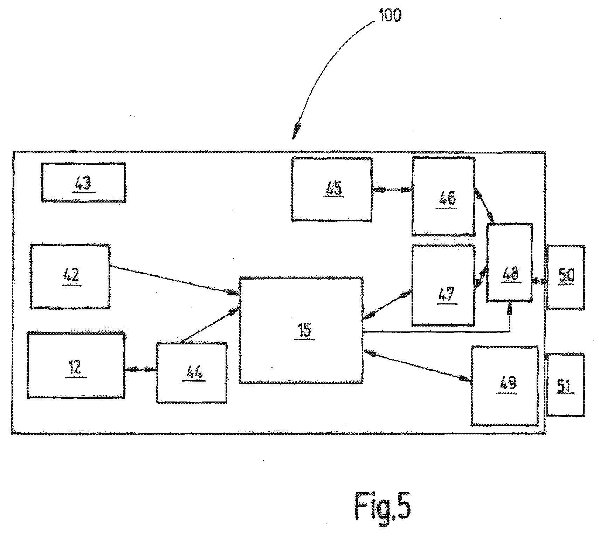

Fig. 5 zeigt ein Blockschaltbild der externen Vorrichtung 100. Bei den in Fig. 5 dargestellten Blöcken handelt es sich um funktionelle Module, welche nicht notwendigerweise getrennten physikalischen Baugruppen entsprechen müssen. Ein einzelnes funktionelles Modul könnte in der externen Vorrichtung durch mehrere physikalische Baugruppen realisiert sein. Des Weiteren wäre es möglich, mehrere funktionelle Module mit einem einzelnen physikalischen Baustein umzusetzen. Als zentrales Steuerelement der externen Vorrichtung 100 dient ein Prozessor 14. Der Prozessor 14 steuert den Daten- und Programmablauf innerhalb der externen Vorrichtung 100 und weist entsprechende Schnittstellen zu den einzelnen funktionellen Einheiten auf. Ein Mikroprogramm, welches auf dem Prozessor abläuft, steuert dabei die Funktionalität der externen Vorrichtung 100 sowie die Kommunikation mit dem angeschlossenen Computer 24 bzw. des Netzwerkes. Dazu kann der Prozessor 14 nicht-flüchtige Speicher, z. B. ROM oder Flash, sowie flüchtige Speicher, z. B. SRAM, enthalten. Der Fingerabdrucksensor 12 dient zur Erfassung des Fingerabdrucks, wobei der Prozessor 14 den erfassten Fingerabdruck mit den Fingerabdruckmerkmalen, welche auf einem Flash-Baustein 44 hinterlegt sind, vergleicht. Zur Erzeugung einer weltweit einmaligen Identifizierungs-ID (Identifizierungscode) dient die ID-Identifizierungseinheit 42. Ein weiterer Flash-Baustein 45 beinhaltet im Wesentlichen Nutzerdaten einer oder mehrerer Benutzer der externen Vorrichtung 100. Auf diesem Baustein können unterschiedliche Daten bzgl. der Benutzer oder des Benutzerverhaltens abgespeichert sein. Z. B. ist es möglich, Desktop-Daten wie Bildschirmhintergrundbilder, Symbole zum schnelleren Aufrufen häufig benutzter Programme sowie Links zu benutzerspezifischen Daten in diesem Speicher abzulegen. Dadurch kann nach erfolgreicher Identifizierung des Benutzers mit dem Computer 24 bzw. Computernetzwerk der Benutzer mit einer gewohnten Desktopumgebung arbeiten sowie eventuelle Veränderungen für eine spätere Anmeldung abspeichern. Über einen USB-Treiberbaustein 46 werden diese Daten vom Flash über einen Multiplexer 48 zur USB-Schnittstelle 50 übertragen um diese an einen angeschlossenen Computer 24 zu übermitteln. Ein weiterer USB-Treiberbaustein 47 dient zur Übermittlung der Daten durch den Prozessor 14. Des Weiteren sieht die externe Vorrichtung 100 ein Funkmodul 49 vor, welches über eine drahtlose Übertragungstechnik, z. B. Bluetooth oder WLAN, über die Funkschnittstelle 51 mit anderen Geräten, z. B. Computer, Computernetzwerk, Netzwerkrouter oder anderen Empfangsgeräten kommuniziert. Zur Spannungsversorgung während längerer, netzfreier Nutzung, dient eine Stromversorgungseinheit 43. Die Stromversorgungseinheit 43 ist vorzugsweise durch einen oder mehrere Akkus realisiert. Alternativ könnte die Stromversorgungseinrichtung 43 auch z. B. Batteriezellen aufweisen. Durch die Stromversorgungseinheit 43 wird die externe Vorrichtung 100, insbesondere die interne Echtzeituhr (in der Abbildung nicht gezeigt), während der netzfreien Nutzung mit Spannung versorgt. Unter netzfreier Nutzung wird hier die Nutzung der externen Vorrichtung 100 über das Funkinterface 51 sowie auch die Nichtnutzung der externen Vorrichtung verstanden. Während des USB-Betriebs, d. h. während der Nutzung der externen Vorrichtung 100 über die USB-Schnittstelle 50, wird die externe Vorrichtung vorzugsweise vom Computer 24 mit Spannung versorgt. Dabei ist vorgesehen, dass die interne Spannungsquelle, z. B. Akku, während der Nutzung am USB-Interface neu geladen wird. Die interne Spannungsversorgungseinheit 43 kann innerhalb der externen Vorrichtung 100 sowie auch in einer Abdeckkappe der externen Vorrichtung 100 angeordnet sein. Als Abdeckkappe wäre z. B. eine übliche Kappe eines USB-Sticks denkbar. Dabei würde diese Kappe einen Akku zur Spannungsversorgung der externen Vorrichtung 100 während der netzfreien Nutzung aufweisen. Während des Betriebs der externen Vorrichtung 100 über das USB-Interface 50 könnte die Kappe in geeigneter Weise mit der externen Vorrichtung zum Zwecke der Ladung der Akkus verbunden sein. Weitere mögliche funktionelle Blöcke wie z. B. ein RFID-Chip, ein Näherungssensor oder ein Temperatursensor sind in Fig. 5 nicht dargestellt.

### Bezugszeichen

- 100: externe Vorrichtung
- 9: Computerprogramm
- 10: Gehäuse
- 11: USB-Stecker
- 12: Fingerabdrucksensor
- 12a: Scannerfläche
- 12b: biometrisches Mittel
- 13: Näherungssensor
- 14: Prozessor
- 15: USB-Laufwerk
- 16: Festwertspeicher
- 17: Arbeitsspeicher
- 18: WLAN-Verbindung
- 19: Datenleitung
- 20: Datenleitung
- 21: Datenleitung
- 22: Datenleitung
- 23: Schnittstelle
- 24: Computer
- 24a: Computerprogramm
- 25: Prozessor
- 26: Festwertspeicher
- 27: Arbeitsspeicher
- 28: Ein-/Ausgabe
- 29: Peripheriegerät
- 30: Peripheriegerät
- 31: Peripheriegerät
- 32: Datenleitung
- 33: Datenleitung
- 34: Datenleitung
- 35: Datenleitung
- 36: Datenleitung
- 37: Verbindung
- 38: Verbindung
- 39: Datenleitung
- 40: Datenleitung
- 41: Datenleitung
- 42: ID-Identifizierungseinheit
- 43: Stromversorgungseinheit
- 44: Speicherbaustein
- 45: Speicherbaustein
- 46: USB Treiberbaustein
- 47: USB Treiberbaustein
- 48: Multiplexer
- 49: Funkmodul
- 50: USB-IF
- 51: Funk-IF

## Patentansprüche

1. Externe Vorrichtung (100) mit mindestens einem Speicher, die über ein serielles Bussystem mit einem Computer (24) oder Computernetzwerk verbindbar ist, **dadurch gekennzeichnet, dass** sie einen Prozessor (14) sowie ein USB-Laufwerk (15) und ein biometrisches Mittel (12b) zur Identifikation einer Person aufweist, wobei Prozessor (14), USB-Laufwerk (15) und biometrisches Mittel (12b) miteinander gekoppelt sind.

2. Vorrichtung nach Anspruch 1, **dadurch gekennzeichnet, dass** das Mittel (12b) ein Fingerabdrucksensor (12) ist.

3. Vorrichtung nach Anspruch 1 oder 2, **dadurch gekennzeichnet, dass** sie einen Chip aufweist.

4. Vorrichtung nach Anspruch 3, **dadurch gekennzeichnet, dass** der Chip ein RFID-Chip ist.

5. Vorrichtung nach einem der vorhergehenden Ansprüche, **dadurch gekennzeichnet, dass** sie Mittel zur Temperaturerfassung aufweist.

6. Vorrichtung nach einem der vorhergehenden Ansprüche, **dadurch gekennzeichnet, dass** sie mit einem USB-Stecker (11) versehen ist.

7. Vorrichtung nach einem der vorhergehenden Ansprüche, **dadurch gekennzeichnet, dass** sie einen Internetzugang aufweist.

8. Vorrichtung nach Anspruch 7, **dadurch gekennzeichnet, dass** der Zugang ein WLAN-Zugang (18) ist.

9. Vorrichtung nach einem der vorhergehenden Ansprüche, **dadurch gekennzeichnet, dass** sie einen Näherungssensor (13) aufweist.

10. Vorrichtung nach einem der vorhergehenden Ansprüche, **dadurch gekennzeichnet, dass** sie mindestens einen Speicher in Form eines Arbeitsspeichers (17) und/oder Festwertspeichers (16) aufweist.

11. Vorrichtung nach einem der vorhergehenden Ansprüche, **dadurch gekennzeichnet, dass** sie mit einem Gehäuse (10) versehen ist.

12. Vorrichtung nach einem der vorhergehenden Ansprüche, **dadurch gekennzeichnet, dass** sie die Bauform eines USB-Sticks aufweist.

13. Vorrichtung nach einem der vorhergehenden Ansprüche, **dadurch gekennzeichnet, dass** die externe Vorrichtung (100) eine ID-Identifizierungseinheit (42) aufweist.

14. Vorrichtung nach einem der vorhergehenden Ansprüche, **dadurch gekennzeichnet, dass** die externe Vorrichtung (100) ein Funkinterface (51), insbesondere ein WLAN- und/oder ein Bluetooth-Interface, aufweist.

15. Vorrichtung nach einem der vorhergehenden Ansprüche, **dadurch gekennzeichnet, dass** die externe Vorrichtung (100) eine Stromversorgungseinheit (43) aufweist.

16. Vorrichtung nach einem der vorhergehenden Ansprüche, **dadurch gekennzeichnet, dass** Nutzerdaten, vorzugweise Desktopdaten, einer oder mehrerer Benutzer in der externen Vorrichtung (100) abgelegt sind.

17. Verfahren zur Verifikation einer Zugangsberechtigung eines Benutzers eines Computers (24) oder Computernetzwerkes, **dadurch gekennzeichnet, dass** zur Verifikation biometrische Daten des Benutzers mittels eines biometrischen Mittels (12b) einer mit dem Computer (24) oder Computernetzwerk verbundenen externen Vorrichtung (100) gemäß einem der Ansprüche 1 bis 16 erfasst und erkannt werden.

18. Verfahren nach Anspruch 17, **dadurch gekennzeichnet, dass** die Vorrichtung (100) ein Mittel zur Temperaturerfassung aufweist und/oder das Mittel (12b) ein Fingerabdrucksensor (12) ist.

19. Verfahren nach einem der Ansprüche 17 oder 18, **dadurch gekennzeichnet, dass** die Vorrichtung (100) einen Chip, vorzugsweise einen RFID-Chip, aufweist.

20. Verfahren nach einem der Ansprüche 17 bis 19, **dadurch gekennzeichnet, dass** das Verfahren folgende Schritte zur Benutzeridentifikation aufweist:
a) Verbinden der externen Vorrichtung (100) mit einem Computer (24) oder Computernetzwerk.
b) Einlesen eines physiologisches Merkmals, insbesondere Fingerabdruck, durch die externe Vorrichtung (100).
c) Überprüfen des physiologisches Merkmals sowie eines in der externen Vorrichtung (100) generierten Identifizierungscodes durch die externe Vorrichtung (100), insbesondere durch einen Prozessor (14) in der Vorrichtung (100).
d) Übermitteln des physiologisches Merkmals sowie des Identifizierungscodes zum Computer (24) oder Computernetzwerk.
e) Überprüfen des physiologisches Merkmals sowie des Identifizierungscodes durch den Computer oder das Computernetzwerk.
f) Freigabe des Zuganges des identifizierten Benutzers auf bestimmte Daten und/oder Programme auf dem Computer (24) oder dem Computernetzwerk.

21. Computerprogramm (9) für eine Computereinrichtung in Gestalt eines Computers (24) oder Computernetzwerkes, die mit einer externen Vorrichtung (100) gemäß einem der Ansprüche 1 bis 16 verbindbar ist, **dadurch gekennzeichnet, dass** das Computerprogramm (9) einen Algorithmus enthält, der bei einer Verbindung zwischen Computereinrichtung und externer Vorrichtung (100) von einem Prozessor (25) der Computereinrichtung abgearbeitet wird, wobei der Algorithmus das Verfahren gemäß einem der Ansprüche 17 bis 20 erfasst.
